# EUROPEAN PATENT SPECIFICATION

(11) **EP 2 373 956 B1**
(45) Date of publication and mention of the grant of the patent: **24.08.2016**
(21) Application number: 09796779.8
(22) Date of filing: 22.12.2009
(51) Int. Cl.: G01D 5/353, G01L 1/24

(54) **DISTRIBUTED OPTICAL FIBRE SENSOR**
VERTEILTER FASEROPTISCHER SENSOR
CAPTEUR À FIBRE OPTIQUE DISTRIBUÉ

(30) Priority: 22.12.2008 GB 0823306
(43) Date of publication of application: 12.10.2011
(73) Proprietor: Fotech Solutions Limited, London EC4M 8AL (GB)
(72) Inventor: ROGERS, Alan, John, Bookham, Surrey KT23 3BA (GB)
(74) Representative: Boult Wade Tennant
(86) International application number: PCT/GB2009/002928
(87) International publication number: WO 2010/073002

(56) References cited:
- WO-A1-02/095349
- GB-A- 2 196 112
- GB-A- 2 243 908

## Description

### Introduction

The present invention relates to a distributed optical fibre sensor, for example such a sensor that can be used to determine the spatial distribution of environmental influences such as pressure, using the effects of such parameters on the birefringence of a sensor fibre.

Distributed optical fibre sensors are used to measure environmental influences such as static pressure, temperature, mechanical movement, and vibration as a function of position along the length of an extended sensor optical fibre. Typical applications include monitoring conditions in oil, gas, and other well bores, maintaining a check on structures such as pipelines, buildings and bridges, and acoustic monitoring for perimeter security. The basic principle is to launch a laser light pulse into one end of the sensor fibre, to collect light backscattered from along the length of the sensor fibre, to relate the time of flight of collected light to distance of travel and hence position along the sensor fibre, and to determine profiles of one of more parameters indicative of the spatial distribution along the fibre of one or more environmental influences, such as a pressure, by analysis of the collected light for each of a range of positions. A variety of optical effects are known for probing the sensor fibre, including Brillouin, Raman and Rayleigh backscatter, and each technique has different characteristics suited for determining different environmental influences, in different types of sensor fibre, over different time scales.

Polarisation optical time domain reflectometry (POTDR), described in Rogers, A.J., Electronics Letters, 1980, 16, 489-490, is another known technique which can be used in distributed optical fibre sensors. A narrow pulse of coherent, polarised probe light is launched into an optical fibre and the fibre's polarisation profile can be determined by polarisation analysis of the backscattered light.

The polarisation properties of any polarisation element can be characterised by its polarisation eigenmodes. These are the only two optical polarisation states which propagate without change of form through the element. The eigenmodes are, in general, elliptically polarised states, but these can be resolved into linear and circular components.

The two eigenmodes possess differing phase and group velocities, thus endowing the element with two principal refractive indices, and thus comprising the phenomenon of "birefringence". The phase difference inserted between the eigenmodes by the element is known as "retardance". As the polarisation properties vary with position along an optical fibre the eigenmodes, and their relative retardation, clearly will also vary.

If the eigenmodes and their retardance are approximately constant along the sensor fibre, then the relative phases of the probe light, which is Rayleigh backscattered and collected at the fibre end, in each of the two eigenmodes, will depend only on the optical path length traversed in each eigenmode. Mixing the separate components together and passing the resulting light through a polarisation analyzer before detection then gives rise to an interference or beat signal of approximately constant frequency, where the frequency is directly related to the retardance. If the birefringence changes along the length of the fibre then the frequency of the beat signal changes as the difference in optical path length for backscattered light in each of the two eigenmodes changes. A temporal function of beat frequency can therefore be used to determine changes in birefringence along a corresponding length of fibre. If the changes in birefringence are dependent on some environmental influence such as temperature or pressure, then a profile of that influence along the length of the fibre can also be determined.

The above technique can be hard to use because of additional, unwanted, random levels of intrinsic and environmentally-induced birefringence in the optical fibre. GB2196112A discusses how such problems might be addressed by using high birefringence optical fibre. Such fibre is structured to have a birefringence which is sufficiently high that there is very little crosstalk between light launched into the two separate eigenmodes, with crosstalk powers of -40dB or less over 100 metres of fibre being currently possible. Such a fibre can be characterised by its beat length, which is the length of fibre over which the optical path lengths in the two eigenmodes differ by one wavelength. For a high birefringence fibre the beat length may typically be of the order of 1 to 5 mm for given optical wavelengths. In contrast, for a conventional monomode telecommunications fibre designed to have low polarisation dispersion, the beat length may be tens or hundreds of metres.

Using a high birefringence fibre as the sensor fibre in a distributed optical fibre sensor implementing a POTDR technique gives rise to significantly reduced contamination of the beat frequency signal by unintended birefringence effects, but gives a very high beat frequency of the order of 100 GHz because of the high level of birefringence, and correspondingly small beat length of the fibre. GB2196112A tries to address this problem by noting that the beat length in high birefringence fibre is dependent on frequency, so that using two simultaneous pulses of different optical frequencies gives rise to two beat signals which themselves interfere to produce a more easily measurable downshifted frequency.

High birefringence fibres are relatively expensive and difficult to manufacture, exhibit higher attenuation than conventional fibres, and tend to be of a few specific construction types such as in the well known "Panda", "bowtie" and elliptical core forms.

A method for the measurement of the full polarisation profile of an optical fibre is discussed in EP1390707.

GB 2 243 908 discloses a distributed fibre-optic sensor in which short pulses of two different frequencies are transmitted along a monomode birefringence optical fibre, each pulse possessing two different eigenmodes whose relative velocity depends upon an external parameter to be measured. GB 2 196 112 discloses a similar arrangement.

It would be desirable to address limitations and disadvantages of the related prior art.

### Summary of the invention

Embodiments of the invention provide a distributed optical fibre sensor which uses a sensor fibre preferably having a low or zero intrinsic birefringence and whose polarisation properties are responsive to an environmental influence such as pressure. Probe light pulses having a diversity of launch polarisation states are used to reduce signal fading and polarisation dependent loss in the retardation beat frequency signals, detected in backscattered probe light, which are sensed and then analysed to determine parameters representative of the environmental influence as a profile along the sensor fibre.

When isotropic fluid pressure acts on a transversely asymmetric optical fibre, such as a side-hole fibre, the effect is to induce a linear birefringence in the fibre. Hence the spatial distribution of the pressure along the fibre is mapped on to that of the linear birefringence. The spatial distribution of the linear birefringence, and thus also of the fluid pressure, can be determined by launching into the sensor fibre a linearly-polarised pulse, and then measuring the frequency of the polarisation signals derived from a polarisation detection of the Rayleigh backscattered light re-emerging from the launch end of the fibre. By using successive pairs of suitably polarised optical pulses, the effects of signal fading and errors induced by polarisation dependent loss can be overcome. Any slowly varying circular birefringence which may be present can be compensated by an occasional measurement of the full birefringence distribution using a full Stokes analysis such as that described in EP1390707.

Accordingly, embodiments of the invention provide methods and apparatus for the measurement of the spatial distribution of linear birefringence along a monomode optical sensor fibre by launching linearly polarised laser light probe pulses into the sensor fibre, and measuring the frequency of polarization-processed signals derived from Rayleigh-backscattered light re-emerging from the launch end.

In particular, embodiments may use the above frequency measurement to map the corresponding spatial distribution of fluid pressure acting on the sensor fibre, which could be a transversely asymmetric fibre, or to map other environmental effects affecting the birefringence of the sensor fibre. The transversely asymmetric sensor fibre may be, for example, a side-hole fibre having a birefringence which responds to pressure.

Embodiments of the invention also provide techniques to overcome signal fading resulting when a propagating probe light pulse evolves into a linear state parallel with either one of the birefringent axes of the sensor fibre. For example, a pair of pulses, which could be sequential, linearly polarised at 45 degrees to each other, may be used to overcome such signal fading. A further such pair of pulses, which could also be sequential, and which are orthogonal to the first pair, may be used to compensate for the error induced by any polarisation dependent loss (PDL) which may be present in the system.

Embodiments of the invention also provide for the occasional, calibrational use of a full Stokes analysis of the re-emerging probe light, to correct for any circular birefringence which may be present.

Accordingly, the invention provides a distributed optical fibre sensor as set out in claim 1, and a method of mapping an environmental parameter along a sensor optical fibre as set out in claim 13.

The distributed optical fibre sensor is preferably transversely asymmetric such that the birefringence of the sensor fibre changes in response to the environmental influence, for example an isotropic influence, such as for measurement of isotropic fluid pressure. For example, a side hole fibre may be used for which the birefringence changes as the pressure changes. Such a side hole fibre may be particularly effective in responding to pressures over a range of a few to a few hundred atmospheres. The sensor fibre may have a very low or zero intrinsic birefringence, for example having an intrinsic typical beat length, for example at atmospheric pressure, of greater than 10 cm, greater than 1 metre, greater than 10 metres, or even greater than 100 metres. The beat length is the distance over which a phase of 2π is inserted between eigenmodes at any given optical wavelength: it is a useful characterizing parameter for a birefringent fibre.

In particular, the light source is arranged to automatically launch a plurality of said pulses of probe light having a diversity of two or more different launch polarisation states, and the analyser may then be arranged to combine properties of the retardation beat frequency signals from each of said plurality of pulses in determining said one or more parameters. Combining data from said pulses could be done in an analogue fashion at the detector, or digitally, for example by summing, differencing or averaging time series data, summing or averaging frequency space data derived from time series data by a Fourier transform, or similar techniques.

The analyser may be adapted to select one or more portions of time series or frequency space data, for example representative of particular localities or regions along the sensor fibre, or to select the data from one or more pulses and reject data from one or more others of the pulses, according to a measure of quality of the data, in order to determine said parameter. However, in some embodiments, either two or four pulses of different launch polarisation states, launched successively into the sensor fibre, are combined by averaging, differencing or summing.

The launch polarisation states may be linear states. These may be defined by corresponding polarisation directions. The diversity of launch polarisation states may then be such that the polarisation directions include first and second groups each of one or more directions, the directions in the first group being separated from the directions in the second group by between 20 and 70 degrees, and more preferably by between 40 and 50 degrees, and more preferably by substantially 45 degrees. A 45 degree spacing is approximately optimal for reducing signal fading due to a probe pulse aligning with a birefringence eigenmode in some locality of the sensor fibre, since a succeeding pulse at a 45 degree orientation is then least likely also to be so aligned in the same locality.

Including further polarisation states in the diversity of states which are approximately orthogonal, for example at between 85 and 95 degrees from the first and second groups respectively, and including these in the data analysis in the same way, helps avoid data degradation due to polarisation dependent losses in the sensor fibre and elsewhere in the sensor apparatus.

In particular, the plurality of launch polarisation states may be selected to minimise the effect of polarisation dependent loss on the said reflected probe light arriving at the detector.

In order to detect the retardation beat frequency signals, the detector may impose one or more detector polarisation states to filter the received backscattered probe light. A particular different detector polarisation state may be used for each different launch polarisation state, or the detector polarisation states may be fixed irrespective of the corresponding launch states. For example, two, or more detector polarisation states, such as linear polarisation states, which are different or substantially orthogonal may be used to filter each received backscattered pulse, and the signal detected in one polarisation state may be subtracted from the signal detected in the other.

The sensor may include a polarisation controller adapted to automatically adjust the launch polarisation states and/or the detector polarisation states, for example in response to a periodic scan of polarisations states available for use. Such a scan may determine a measure of signal quality from each of several available states on the basis of properties of backscattered probe light received at the detector.

As mentioned above, the plurality of pulses may comprise pulses having a diversity of launch polarisations states when launched into the sensor optical fibre. The diversity of launch polarisation states may, for example, comprise first and second linear polarisation states having polarisation directions separated by between 40 and 50 degrees, or by approximately 45 degrees. The diversity of launch polarisation states may comprise third and fourth linear polarisation states substantially orthogonal to said first and second states respectively.

Embodiments also provide a method of calibrating the described sensor, by: coupling an analyser to the sensor optical fibre; using the analyser to determine birefringence properties of the sensor optical fibre; and calibrating the sensor using said determined birefringence properties. In particular, the analyser may be a portable Stokes analyser. The determined birefringence properties may comprise circular birefringence properties in profile along the sensor optical fibre.

### Brief description of the drawings

Figure 1 illustrates a distributed fibre optic sensor according to an embodiment of the invention;
Figures 2a and 2b illustrate the birefringence eigenmode axes of a sensor fibre, and the relative directions of the eigenmode axes of a diversity of launch polarisation states for use in launching into the sensor fibre of figure 1 a plurality of probe light pulses having polarisation state diversity;
Figure 3 shows the sensor of figure 1 with the addition of an adaptive polarisation controller 28, and showing the optional or occasional use of a fibre analyser instrument to derive birefringence property profiles of the sensor fibre which can be used by the analyser 22 to adapt for effects such as changing circular birefringence;
Figure 4 illustrates an arrangement for data processing using the detector 20 and analyser 22 of figures 1 or 3; and
Figure 5 illustrates schematically other details of an arrangement for implementing the invention.

### Detailed description of embodiments

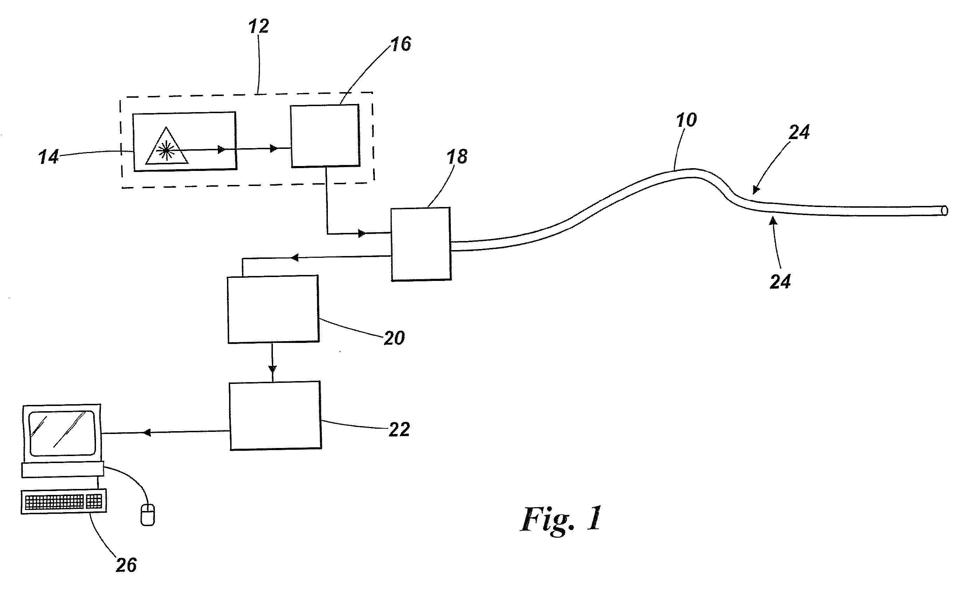

Referring now to figure 1 there is shown a distributed optical fibre sensor embodying the invention. A sensor fibre 10 is deployed in an environment to be sensed, such as along a building structure or down a well bore. The sensor fibre is structured and/or deployed such that it has a birefringence which is responsive to an environmental influence 24. A light source 12 generates pulses of probe light for launching into the sensor fibre, and includes a laser 14 which delivers a laser beam to source optics 16. The source optics 16 conditions the pulses into the desired form and passes them to a fibre coupling 18 for delivery into the sensor fibre.

As each pulse of probe light travels along the fibre, some of the light is Rayleigh-backscattered from the fibre material, structure and defects. The backscattered light arrives back at the fibre coupling 18 after an interval based on the return optical path length travelled, and is passed to a detector 20 where properties of the backscattered light are detected. Property data from the detector is passed to an analyser 22, where the data are used to derive profiles of one or more parameters 24 indicative of the environmental influence 24 to which the birefringence of the sensor fibre is responsive along at least a part of its length. Because the time of arrival of backscattered light at the fibre coupling 18 depends on the distance travelled, the time of arrival is also a good indicator of the location of backscatter. On this basis, a profile of a parameter can be determined as a function of length along at least a portion of the sensor fibre.

Derived data relating to length profiles of the birefringence of the fibre and/or the one or more environmental influences may be displayed by the analyser 22, or may be stored, or may be passed to another element such as computer 26 for display.

In the arrangement of figure 1 a polarisation optical time domain reflectometry technique is used to determine the backscatter properties, and therefore the environmentally related parameter. In particular, when backscattered light from a probe pulse is received at the detector, a retardation beat frequency signal is detected in the received probe light using one or more detector polarisation states. This can be achieved, for example, by passing the received light through a linear polarisation filter having a preselected or controlled detector polarisation state, and receiving the linearly polarised light at a photodetector, for example a photodiode.

The photodetector signal exhibits a retardation beat frequency signal which is dependent upon the birefringence of the sensor fibre in the region from which the probe light giving rise to that part of the frequency signal was backscattered. The retardation beat frequency signal is passed to the analyser 22 which analyses the signal and provides an indication of the one or more environmental influences 24 to which the birefringence of the fibre is responsive.

The length of the launched probe light pulses should preferably be less than about half the beat length in any portion of the sensor fibre 10, in order for a retardation beat frequency signal to be generated and detected. The maximum frequency which can be measured is that which corresponds to a beat length equal to twice the width of a probe light pulse. In this case, the beat photodetector signal may be sampled at the Nyquist rate and the local value of the retardation beat frequency can be determined.

The sensor optical fibre used in the example of figure 1 is not a high birefringence fibre, and is preferably a fibre having an intrinsically low, near zero, or substantially zero birefringence (for example at atmospheric pressure, or typical or standard atmospheric temperature and pressure conditions). The sensor fibre may have an intrinsic or typical beat length of at least 10 metres, and optionally of more than 100 metres. The sensor fibre is arranged or designed so that it displays a birefringence responsive to an environmental influence, for example at high pressures of tens to hundreds of atmospheres. To this end, the sensor fibre may be a side-hole fibre which changes cross sectional shape slightly under changes of isotropic pressure. Other forms of sensor fibre which are transversely asymmetric, so as to respond to an isotropic environmental influence with a change of birefringence may be used. Other influences that may be detected with such a fibre may include temperature and mechanical stress, bending or movement. Acoustic signals and environmental noise may be detected, for example, as rapid changes in pressure.

The accuracy with which an environmental influence such as pressure may be measured depends upon the accuracy with which the analogue retardation beat frequency can be measured, and this in turn depends upon the signal to noise ratio of the detector 20, and any polarisation dependent loss or signal fading which may be present. The signal to noise ratio of the detector 20 will be limited by system noise, and this will be due to at least four sources: coherence fading noise, optical amplifier noise, detector thermal noise and shot noise. The coherence fading noise is a result of coherence in the optical source leading to optical interference ("speckle") in the output optical signal. It is highly wavelength-dependent (as for all interferometric signals) and can be averaged out either by increasing the optical bandwidth, or by "jittering" the wavelength of a narrow band source, i.e. the laser 14. The latter is normally more acceptable, because too large a source bandwidth will compromise the polarimetry. Clearly, an optimum can be sought for any particular design of sensor.

Optical amplifier noise, thermal noise, and shot noise are random sources of noise and can be reduced by averaging over a period of time thus having the effect of reducing the measurement bandwidth (the increase in signal to noise ratio will only vary as the square root of the measurement time, whereas the measurement bandwidth will be inversely proportional to it). In general, the measurement time available for a pressure measurement might be quite long, for example a few minutes, because pressures in large industrial systems possess a large amount of mechanical inertia. In this case there usually, therefore, will be no great difficulties imposed by the necessity for varying the launch polarisation state, or using wavelength jittering or signal averaging. For such measurement times, with suitable system optimisation, 0.1 % accuracy of measurement should be achievable.

Because the sensor fibre 10 is not a high birefringence fibre, it may have only a weak or substantially zero degree of birefringence at the fibre coupling 18 and elsewhere, and the degree of birefringence and precise direction of the birefringence axes, where discernable, may vary along the length of the fibre - indeed it is necessary for the birefringence to be variable to permit a measurement of an environmental influence. Moreover, because the birefringence is relatively weak in the sensor fibre 10, circular birefringence and other effects may cause optical power to move between the eigenmodes, even where the birefringence is relatively large. Polarisation states which typically evolve periodically from elliptical through circular and linear states, with periods of one beat length, may therefore have an orientation which varies considerably both along the fibre, and with time as the precise state of the light source and the fibre changes.

Any polarisation state which corresponds to one of the local birefringence eigenmodes of the sensor fibre in a particular locality, will give rise to backscattered light which has been influenced by one, but not both of the eigenmodes in that locality. This backscattered light therefore yields little or no retardation beat frequency signal at the detector 20. Moreover, if the polarisation state then remains in only one eigenmode as it propagates further, any retardation beat frequency signal from beyond this part of the fibre is also likely to be lost. To avoid or limit this localised or extended signal fading, the source optics 16 of figure 1 are adapted to control the polarisation of the probe light pulses launched into the sensor fibre.

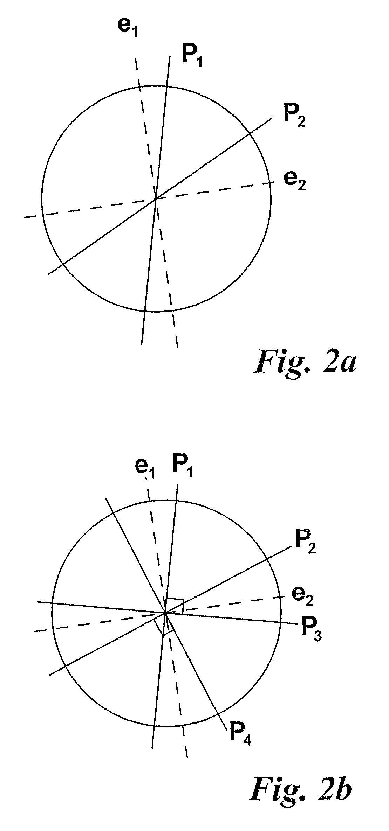

To avoid or reduce fading of the retardation beat frequency signal, the light source 12 is arranged to automatically launch probe light pulses into the sensor fibre with a diversity of launch polarisation states. Figure 2a illustrates one mode of operation which can be used by the light source 12. The local birefringence eigenmodes of the sensor fibre at the fibre coupling 18 may be unknown, or indiscernible because they are so ill-defined or non-existent at that point, but are illustrated as orthogonal, linear directions e1 and e2. The source optics 16 conditions a probe light pulse, to be delivered into the fibre, with a linear launch polarisation state aligned with direction p1. If the eigenmode directions e1 and e2 are known then it may be desirable to align p1 part way between these directions to ensure that substantial optical power enters both e1 and e2, to avoid excessive signal fading at the near end of the sensor fibre, and hopefully for the whole of the sensor fibre. Whether or not e1 and e2 are known, figure 2a illustrates how the light source 12 also delivers one or more pulses having a different launch polarisation state aligned with a second polarisation direction p2 which is not parallel with p1. Ideally, the directions p2 and p1 should be separated by about 45 degrees, because this will deliver significant power into both eigenmodes of the sensor fibre for at least one of p1 and p2 at any position along the fibre, and gives the best chance of alleviating signal fading. However, using a separation of exactly 45 degrees is not necessary, and the light source 12 may automatically apply similar fixed or varying linear launch polarisation states with polarisation directions separated by other angles or a range of angles, such as between 40 and 50 degrees, or with polarisation direction angles spread across a wider range, to reduce signal fading. The p1 and p2 groups, or other groups of pulses may be launched alternately or in some other sequential pattern. Alternate launching provides a minimum delay between pulses of similar launch polarisation states, so decreases the likelihood of the fibre polarisation state changing in that period.

Figure 2b shows an arrangement in which launch polarisation states at a second pair of polarisation directions p3 and p4, which are orthogonal to directions p1 and p2 respectively, are used to overcome the effects of polarisation dependent loss, which is discussed further below.

Although figures 2a and 2b are directed to polarisation schemes in which linearly polarised pulses are launched into the sensor fibre, circular or more generally elliptical polarisations could also be used, with variation between the launch polarisation states of different probe light pulses including, for example, phase delays and/or polarisation direction angles.

Although delivering pulses of just two, four, or another low number of different but fixed launch polarisation states is convenient for constructing the source optics 16, more generally, the light source 12 may deliver to the sensor fibre a plurality of probe light pulses having a plurality of different launch polarisation states. The different launch polarisation states may be selected to maximise the likelihood of being able to select a retardation beat frequency signal from a single polarisation state which is useable for parameter determination along the full length of interest, of recovering a combination such as a sum, difference or average of retardation beat frequency signals of all of a subset of the plurality of launch polarisation states which is subject to reduced signal fading and reduced polarisation dependent loss within the length of interest, or of recovering a retardation beat frequency signal for different parts of the fibre from different combinations of one or more launch polarisation states.

The detector 20 may be arranged to process each backscattered pulse using a detector polarisation state matching, or having a correspondence with the launch polarisation state of that pulse. Alternatively, selection of the detector polarisation state may be independent, or selected independently of the launch polarisation state.

The detector 20 or analyser 22 may select for further analysis, or discard, the retardation beat frequency signal from one or more launch polarisation states of the plurality of pulses depending on a measure of quality such as signal to noise ratio, or the retardation beat frequency signals from the different launch polarisation states may be combined during processing by the detector or analyser. As mentioned above, in one embodiment launch polarisation states are alternated and the retardation beat frequency signals are summed, differenced or averaged over the alternate launch states, although other sequences of launch states may be used and the signals summed or averaged.

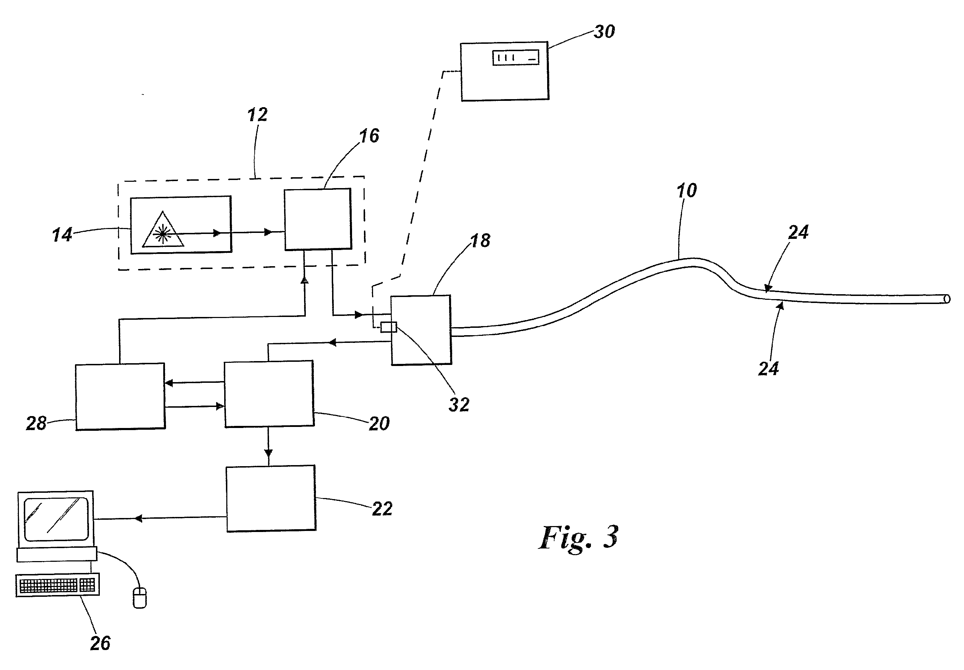

Figure 3 is similar to figure 1 but adds a polarisation controller element 28. Data relating to the detected backscattered light, for example the intensity, signal to noise ratio, or some other quality measure of a detected beat frequency signal, are used by the polarisation controller element to direct the source optics 16 to control the launch polarisation states of the probe light pulses. For example, the polarisation controller element may direct the light source 12 to scan through a number of different launch polarisation states, detect one or more optimum launch polarisation states, and continue to automatically use that or those launch polarisation states for launching probe pulses for a period of time for determination of the one or more environmental influences 24. The scan process can be repeated periodically as required. The polarisation control element can also direct the detector 20 to adopt detector polarisation states appropriate for the launch polarisation states to be used, and/or to scan through a number of detector polarisation states, and to use optimum detector polarisation states in the same way.

Additional optical elements in the detector may be used to condition the polarisation properties of the received light, for example to accommodate circular birefringence in the sensor fibre. Such optical elements may also be adjusted by the polarisation control element.

As an alternative or in addition to the polarisation controller element of figure 3, a separate instrument 30 can be used from time to time to assess properties of the sensor fibre (and fibre coupling, and or/other parts of the system as required), so that aspects of the sensor such as the source optics and the detector, for example the launch polarisation states, and the detector polarisation settings, can be adjusted. The separate instrument 30 could, for example, be a full Stokes analyser which can determine all four Stokes parameters of the light emerging from the sensor fibre. A port 32 maybe provided at the fibre coupling 18 for this purpose.

The separate instrument may be used to derive profiles of some or all of the Stokes parameters or other birefringence properties along a length of the sensor fibre, and such properties may then be stored and used by the analyser 22 in determining parameters indicative of the environmental influences 24.

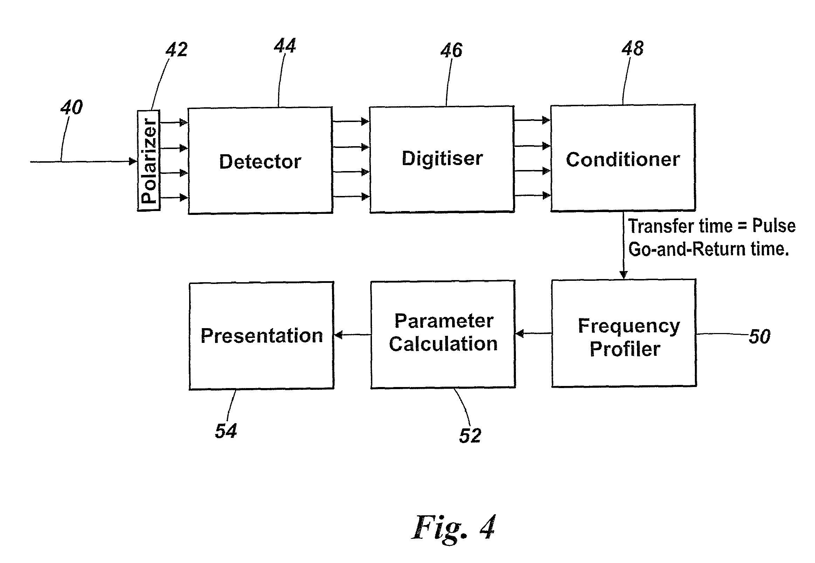

Figure 4 illustrates schematically an arrangement of the detector 20 and analyser 22 of figures 1 or 3, with an emphasis on the data processing aspects. An optical input 40 containing backscattered probe light is received from the fibre coupling 18 as previously discussed, and amplified and/or conditioned as required (not shown). A number of different detector polarisation states are applied to the optical input 40 by polarisation analyser 42. In the illustrated embodiment, four different detector polarisations are used here, for example linear polarisation filters matching to linear polarisations having directions P1 to P4 discussed above in connection with figure 2b, for probe light pulses launched using those launch polarisation states. The filtered optical outputs from the polarisation analyser 42 are passed to a sequential or parallel analogue detector 44, for example operating at about 250 MHz. The analogue detector carries out detection of each filtered optical output into electrical form, and the four resulting electrical signals are passed to a sequential or parallel digitizer 46, for example operating at about 1 GHz, to generate a separate signal time series for each detector polarisation state. The four time series are passed to a time series conditioner 48 where pulse train storage, normalisation and averaging are carried out. The conditioned time series are each passed to a frequency profiler 50, for example operating in about 10 nanosecond steps, to determine a frequency profile over time, or equivalently over a length of the sensor fibre. The frequency profile is passed to a parameter calculation element 52, for example to derive a pressure parameter as a function of position along the sensor fibre, along with parameter calibration and smoothing, and these data may be passed to a presentation element 54, which could be provided for example by a dedicated screen, or by a separate computer unit 26 as shown in figure 1.

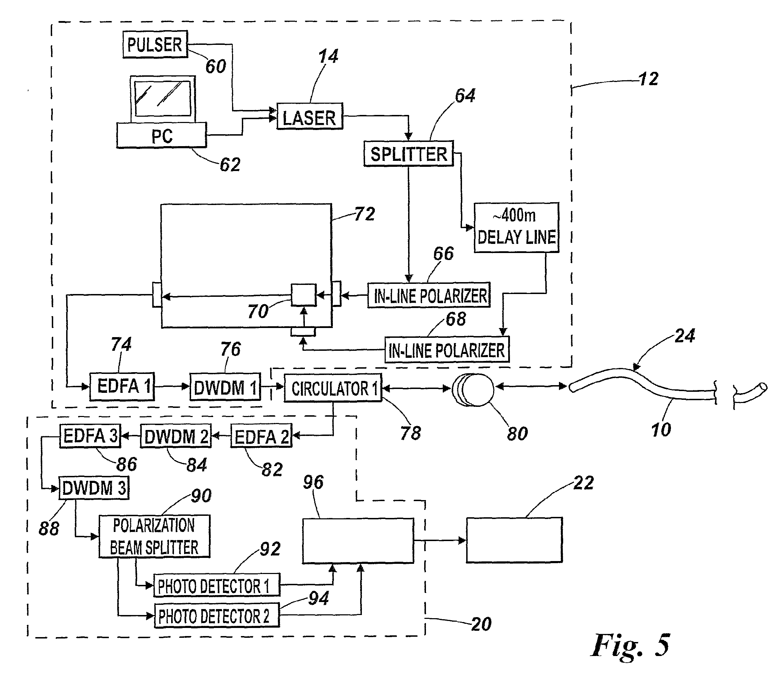

Figure 5 illustrates another arrangement for putting the invention described above into effect. For convenience the arrangement is divided approximately into the same sensor fibre 10, light source 12, detector 20 and analyser 22 elements as used in figures 1 and 3. The light source includes a laser 14 controlled by pulsing circuitry 60 and a computer 62. The laser beam is divided two ways by a splitter 64, and both parts of the beam are polarised at two different in-line polarisers 66, 68 which between them provide the launch polarisation state diversity. One of the parts of the beam is also delayed using a fibre delay line of a few hundred metres in length, so that the two different launch state polarisations can be used as successive pulses of otherwise identical probe light to be launched into the sensor fibre, followed by another pair of successive pulses launched at the next laser pulse a short time later. The fibre delay line needs to be long enough to ensure that all backscattering of the first pulse of probe light has exited the sensor fibre before the second pulse of the pair is launched into the sensor fibre. For example, if the sensor fibre is 1000m in length, a delay equivalent to at least 2000m of pulse travel is required.

The two pulses of probe light are passed, at different times, into a beam combiner 70 which forms a part of a polarisation processing unit (PPU) 72. The output from the PPU 72 is amplified at a first erbium doped fibre amplifier 74, and conditioned using a first dense wave division multiplexing filter 76, before being injected into a fibre optic link 80 using circulator 78. The fibre optic link 80 carries the successive pulses of probe light having two different launch state polarisations to the sensor fibre 10, and also carries probe light backscattered from the sensor fibre, which is routed through the circulator 78 and into detector 20.

The detector 20 first conditions the collected backscattered probe light using a second erbium doped fibre amplifier 82, a second dense wave division multiplexing filter 84, and third erbium doped fibre amplifier 86, and a third dense wave division multiplexing filter 88 before the backscattered probe light is delivered to a polarisation beam splitter 90. The beam splitter divides the conditioned backscattered probe light into two orthogonal polarisations which are then passed to first and second photodetectors 92, 94 respectively. The signals from the photodetectors are then stored and/or processed further at signal processing element 96, before passing to analyser element 22 for determination of a profile of a parameter indicative of environmental influence 24 along at least one section of the sensor fibre 10.

### Discussion of birefringence in optical materials and optical fibres

The phenomenon of birefringence in an optical material on which the above embodiments rely is where the refractive index of the material is different for differing polarisation states of light propagating within it. All such birefringent materials possess two polarisation eigenmodes, which are those polarisation modes which propagate without change of form. Thus, a linearly birefringent material possesses two orthogonal, linear eigenmodes; a circularly birefringent material possesses two orthogonal (oppositely rotating), circular eigenmodes; and a general, elliptically birefringent material has two elliptical eigenmodes in which the ellipses have the same ellipticity with orthogonal major axes. In all cases of birefringence the eigenmodes propagate with differing velocities.

The polarisation transfer function of a material can be conceptualised by noting that any given polarisation state launched into such a material (for example into an optical fibre) can be resolved into the eigenmode components. The appropriate relative phase delay is then inserted between them, for a chosen length, and finally the components are recombined to give the output state. Clearly, for a phase delay of 2π the original input polarisation state will be regenerated. The length, for a given material, over which a phase of 2π is inserted is called the beat length, and is wavelength dependent.

For a side-hole optical fibre, the fibre cross section is linearly asymmetrical, and it will thus be largely linearly birefringent, if it either has an intrinsic birefringence, or the surrounding environment, for example by way of high fluid pressure, induces such a birefringence. The fibre will be characterised by the rate at which a phase delay is inserted between the linear eigenmodes, and the direction of the axes of the linear eigenmodes relative to an arbitrary reference. Isotropic fluid pressure acting on such a fibre will affect, proportionally, the linear birefringence, so that a measure of the phase delay as a function of position along the fibre will be related to the value of the fluid pressure along it.

Polarisation dependent loss is a phenomenon whereby, in an optical material, differing polarisations states suffer different propagation loss, and it can be an important source of error in polarimetric systems. Predominantly this phenomenon occurs in the form of differential loss between two linear polarisation states, and is often confined to discrete components such as joints, splitters, couplers and filters. This can be a cause of signal fading in the retardation beat frequency signal discussed above, but the effect can be mitigated by using a diversity of launch polarisation states, for example using pairs of orthogonal states as already discussed above.

### Stokes analysis of an optical fibre

To perform a Stokes analysis a pulse of polarised light is launched into the end of a monomode optical fibre and the temporal value of the emergent polarisation state of the light Rayleigh backscattered to the launch end is determined quasi-continuously, in real time. A Stokes analyzer is a device for performing this determination of the quasi-instantaneous polarisation state of the backscattered light as a function of time. It does this by splitting the light emerging from the fibre into four streams and performing separate polarisation operations on them to yield the quasi-instantaneous values of the four Stokes parameters which characterise the polarisation ellipse. With this information the full polarisation profile of the fibre can be determined (under certain conditions), that is to say the spatial distributions of the retardation of the linear birefringence, the orientation of the linear birefringence axes with respect to an arbitrary reference direction, and the circular birefringence, each as a continuous function along the fibre, within the limitations imposed by the spatial resolution of the system.

### Discussion of frequency map analysis

If a teclinical application does not require the full polarisation profile then the analysis can be simplified. For the measurement of fluid pressure or another environmental influence affecting the birefringence of an asymmetric fibre, all that is required is the linear retardance profile, or equivalent information such as the retardation beat frequency signal profile as discussed above.

If one may assume that only linear birefringence is present (i.e. that there is no intrinsic circular birefringence or twist-induced circular birefringence), then one may use a simple linear polarisation analyser at the detector 20 to determine how the linear polarisation state of the backscattered light evolves with time. If, in this case, a launched probe light pulse is linearly polarised at a known angle with respect to an arbitrary reference direction, then the polarisation state will evolve continuously as it propagates down the linearly birefringent fibre, provided only that it does not evolve into a linear state parallel to one of the local birefringent axes, for then, as an eigenstate, it will propagate unchanged, and will provide no indication of retardance of the linear birefringence. In all other cases it will evolve at a rate equal to the local value of the retardance of the linear birefringence. For every element of retardation, the input polarisation state will be reproduced after one beat length. This, in turn, means that the output polarisation state will change at this same rate, so that a linear polariser at the detector 20 will pass a linear polarisation state which varies in amplitude with a period equal to the time it takes the light to traverse one beat length at the sensor fibre position. Hence the birefringence profile is now mapped on to the variation in the frequency of the retardation beat frequency signal picked up at the detector 20 shown in figures 1, 3 and 5 after filtering by a linear polarisation analyser operating with a detector polarisation state.

The possibility of probe light entering the sensor fibre, or evolving within the fibre to a linear launch polarisation state which is parallel with a local birefringence axis is addressed as discussed above by launching successive or multiple pulses which are linearly polarised at 45 degrees to each other, or with other schemes of launch polarisation diversity. If the detected frequency signal for one launch polarisation state is small, it will be correspondingly large for the other launch state. Hence combining detected signals for the two launch polarisation states, for example by adding together, differencing
or averaging, provides a net signal of roughly uniform amplitude or signal to noise ratio. Alternatively, the better of the two launch polarisation states could be used for data processing, and the data from the other discarded, or selected portions of each signal, corresponding to particular lengths of the sensor fibre where the signal from a signal is good, could be selected.

If circular birefringence is present in the sensor fibre then its effects can be allowed for in the sensor if its profile along the fibre is known. Because birefringence due to twisting of the sensor fibre will vary with time, albeit slowly, the sensor may be calibrated periodically to accommodate for the circular birefringence profile using a Stokes analyzer or other device which determines the circular birefringence profile.

A number of variations and modifications to the described embodiments will be apparent to the skilled person without departing from the scope of the invention. For example, the described sensor may be used to detect an environmental influence along only a part of a sensor fibre, or along multiple continuous discontinuous lengths of sensor fibre. The sensor fibre may be made up of multiple joined segments, and may be coupled directly into the fibre coupling 18 shown in the figures, or coupled by other lengths of optical fibre or other arrangements.

The order of launched pulses with different launch polarisation schemes may be varied, and a wide variety of diversity schemes may be used. The detector optics may preferably use multiple parallel channels to process backscattered pulses with multiple launch polarisation states.

## Claims

1. A distributed optical fibre sensor comprising:
a monomode sensor optical fibre (10) for disposing in an environment such that the birefringence of the sensor fibre is responsive to at least one environmental influence (24);
a light source (12) arranged to launch pulses of probe light each having a defined launch polarisation state into the sensor optical fibre;
a detector (20) arranged to receive probe light following backscatter of said pulses within the sensor optical fibre, and to detect retardation beat frequency signals from the received probe light using one or more detector polarisation states; and
an analyser (22) arranged to determine at least one parameter indicative of said environmental influence, as a profile along at least part of the sensor optical fibre, from properties of the retardation beat frequency signals, **characterised in that**:
the light source is arranged to automatically launch a plurality of said pulses of probe light having a diversity of two or more different launch polarisation states.

2. The distributed optical fibre sensor of claim 1 wherein the analyser (22) is arranged to combine properties of the retardation beat frequency signals from each of said plurality of pulses in determining said one or more parameters.

3. The distributed optical fibre sensor of claim 1 or 2 wherein the launch polarisation states are linear states having corresponding polarisation directions.

4. The distributed optical fibre sensor of claim 3 wherein the diversity of launch polarisation states is such that the polarisation directions include first and second groups each of one or more directions, the directions in the first group being separated from the directions in the second group by between 20 and 70 degrees, and more preferably by between 40 and 50 degrees, and more preferably by substantially 45 degrees.

5. The distributed fibre optic sensor of claim 1 or 2 wherein the diversity of polarisation states comprises first and second polarisation states separated by an angle of substantially 45 degrees.

6. The distributed optical fibre sensor of claim 5 wherein the plurality of pulses comprises one or more pairs of sequential pulses launched with linear polarisation states in directions at 45 degrees to each other.

7. The distributed optical fibre optical sensor of any of claims 4 to 6 wherein the plurality of polarisation directions includes third and fourth groups of directions, the third group being substantially orthogonal to the first group, and the fourth group being substantially orthogonal to the second group.

8. The distributed optical fibre sensor of any of claims 1 to 7 wherein the plurality of launch polarisation states is selected to reduce the polarisation dependent loss of said pulses of probe light backscattered to the detector.

9. The distributed optical fibre sensor of any of claims 1 to 7 wherein the detector (22) detects the retardation beat frequency signals by interposing one or more detector polarisation elements to filter the received probe light.

10. The distributed optical fibre sensor of claim 9 wherein, for said plurality of pulses, a particular different detector polarisation state is used for each different launch polarisation state.

11. The distributed optical fibre sensor of claim 9 wherein, for said plurality of pulses, each detector polarisation state is set to match the launch polarisation state of the pulse being detected.

12. The distributed optical fibre sensor of any preceding claim further comprising a polarisation controller (28) adapted to automatically adjust the launch polarisation states and/or the detector polarisation states on the basis of properties of backscattered probe light received at the detector.

13. A method of mapping an environmental parameter along a monomode sensor optical fibre, comprising:
disposing the sensor optical fibre (10) in an environment such that the birefringence of the sensor fibre is responsive to at least one environmental influence (24);
launching a series of probe light pulses into the sensor optical fibre (10); detecting a retardation beat frequency signal in probe light backscattered from the sensor optical fibre; and
mapping the parameter as a profile along the sensor fibre from the retardation beat frequency signals of the plurality of pulses,
**characterised in that** the plurality of pulses comprises pulses having a diversity of launch polarisation states when launched into the sensor optical fibre.

14. The method of claim 13 wherein the diversity of launch polarisation states comprises first and second linear polarisation states having polarisation directions separated by between 40 and 50 degrees.

15. The method of claim 14 wherein the diversity of launch polarisation states comprises third and fourth linear polarisation states substantially orthogonal to said first and second states respectively.

16. The distributed optical fibre sensor according to claims 1 to 12 or the method according to claims 13 to 15 wherein the environmental influence is an isotropic environmental influence and the sensor optical fibre is a transversely asymmetric optical fibre constructed such that the birefringence of the sensor optical fibre changes in response to an isotropic environmental influence.

17. The distributed optical fibre sensor according to claims 1 to 12 or 16 or the method according to claims 13 to 16 wherein the sensor optical fibre is a low birefringence optical fibre having an intrinsic typical beat length of greater than a value selected from the list of: 10 centimetres; 1 metre; and 10 metres.

18. The distributed optical fibre sensor according to claims 1 to 12, 16 or 17 or the method according to claims 13 to 17 wherein the environmental influence or parameter is, or comprises, pressure.

19. The distributed optical fibre sensor of claim 18 or the method of claim 18 wherein the sensor optical fibre is a side hole fibre having a birefringence responsive to local isotropic fluid pressure, such that the retardation beat frequency signal is indicative of said local isotropic fluid pressure.

## Patentansprüche

1. Verteilter Lichtwellenleitersensor, der aufweist:
eine Sensor-Monomodelichtleitfaser (10), die so in einer Umgebung angeordnet werden kann, dass die Doppelbrechung der Sensorfaser auf zumindest einen Umgebungseinfluss (24) anspricht,
eine Lichtquelle (12), die zum Einkoppeln von Sondierungslichtimpulsen mit jeweils einem definierten Einkopplungspolarisationszustand in die Sensor-Lichtleitfaser ausgebildet ist, einen Detektor (20), der dazu ausgebildet ist, Sondierungslicht, das aus innerhalb der Sensor-Lichtleitfaser rückgestreuten Impulsen hervorgeht, zu empfangen und unter Verwendung von einem oder mehreren Detektorpolarisationszuständen aus dem empfangen Sondierungslicht Verzögerungsschwebungsfrequenzsignale zu erfassen, und
einen Analysator (22), der dazu ausgebildet ist, aus Eigenschaften der Verzögerungsschwebungsfrequenzsignale zumindest einen für den Umgebungseinfluss bezeichnenden Parameter als Profil entlang von zumindest einem Teil der Sensor-Lichtleitfaser zu bestimmen,
**dadurch gekennzeichnet, dass**
die Lichtquelle dazu ausgebildet ist, automatisch mehrere der Sondierungslichtimpulse mit einer Diversität von zwei oder mehr unterschiedlichen Einkopplungspolarisationszuständen einzukoppeln.

2. Verteilter Lichtwellenleitersensor nach Anspruch 1, wobei der Analysator (22) dazu ausgebildet ist, beim Bestimmen des einen oder der mehreren Parameter die Eigenschaften der Verzögerungsschwebungsfrequenzsignale aus jedem der mehreren Impulse zu kombinieren.

3. Verteilter Lichtwellenleitersensor nach Anspruch 1 oder 2, wobei die Einkopplungspolarisationszustände lineare Zustände mit entsprechenden Polarisationsrichtungen sind.

4. Verteilter Lichtwellenleitersensor nach Anspruch 3, wobei die Diversität der Einkopplungspolarisationszustände so ist, dass die Polarisationsrichtungen eine erste und eine zweite Gruppe mit jeweils einer oder mehreren Richtungen umfassen, wobei sich die Richtungen der ersten Gruppe von den Richtungen der zweiten Gruppe um 20 bis 70 Grad, bevorzugter um 40 bis 50 Grad und noch bevorzugter um etwa 45 Grad unterscheiden.

5. Verteilter Lichtwellenleitersensor nach Anspruch 1 oder 2, wobei die Diversität der Polarisationszustände einen ersten und einen zweiten Polarisationszustand mit einem Winkelabstand von etwa 45 Grad umfasst.

6. Verteilter Lichtwellenleitersensor nach Anspruch 5, wobei die mehreren Impulse ein oder mehrere Paare aufeinanderfolgender Impulse umfassen, die mit linearen Polarisationszuständen mit Richtungen von 45 Grad relativ zueinander eingekoppelt werden.

7. Verteilter Lichtwellenleitersensor nach einem der Ansprüche 4 bis 6, wobei die mehreren Polarisationsrichtungen eine dritte und eine vierte Gruppe von Richtungen umfassen, und wobei die dritte Gruppe in etwa orthogonal zur ersten Gruppe ist und die vierte Gruppe in etwa orthogonal zur zweiten Gruppe ist.

8. Verteilter Lichtwellenleitersensor nach einem der Ansprüche 1 bis 7, wobei die mehreren Einkopplungspolarisationszustände so gewählt sind, dass die polarisationsabhängigen Verluste der zum Detektor zurückgestreuten Sondierungslichtimpulse verringert werden.

9. Verteilter Lichtwellenleitersensor nach einem der Ansprüche 1 bis 7, wobei der Detektor (22) die Verzögerungsschwebungsfrequenzsignale durch Einfügen von einem oder mehreren Detektorpolarisationselementen zum Filtern des empfangenen Sondierungslichtes bestimmt.

10. Verteilter Lichtwellenleitersensor nach Anspruch 9, wobei bei den mehreren Impulsen für jeden der verschiedenen Einkopplungspolarisationszustände ein bestimmter anderer Detektorpolarisationszustand verwendet wird.

11. Verteilter Lichtwellenleitersensor nach Anspruch 9, wobei bei den mehreren Impulsen jeder Detektorpolarisationszustand so festgelegt ist, dass er zu dem Einkopplungspolarisationszustand des zu erfassenden Impulses passt.

12. Verteilter Lichtwellenleitersensor nach einem der vorhergehenden Ansprüche, der ferner eine Polarisationssteuerung (28) aufweist, die zum automatischen Einstellen der Einkopplungspolarisationszustände und/oder der Detektorpolarisationszustände auf Basis von Eigenschaften des am Detektor empfangenen zurückgestreuten Sondierungslichts ausgebildet ist.

13. Verfahren zum Auftragen eines Verlaufs eines Umgebungsparameters entlang einer Sensor-Monomodelichtleitfaser, das aufweist:
Anordnen der Sensor-Lichtleitfaser (10) in einer Umgebung so,
dass die Doppelbrechung der Sensorfaser auf zumindest einen Umgebungseinfluss (24) anspricht,
Einkoppeln einer Reihe von Sondierungslichtimpulsen in die Sensor-Lichtleitfaser (10),
Bestimmen eines Verzögerungsschwebungsfrequenzsignals in dem von der Sensor-Lichtleitfaser zurückgestreuten Sondierungslicht, und
Auftragen des aus den Verzögerungsschwebungsfrequenzsignalen der mehreren Impulse bestimmten Parameters als Profil entlang der Sensorfaser,
**dadurch gekennzeichnet, dass** die mehreren Impulse Impulse mit einer Diversität der Einkopplungspolarisationszustände beim Einkoppeln in die Sensor-Lichtleitfaser umfassen.

14. Verfahren nach Anspruch 13, wobei die Diversität der Einkopplungspolarisationszustände einen ersten und einen zweiten linearen Polarisationszustand mit sich um 40 bis 50 Grad unterscheidenden Polarisationsrichtungen umfasst.

15. Verfahren nach Anspruch 14, wobei die Diversität der Einkopplungspolarisationszustände einen dritten und einen vierten linearen Polarisationszustand umfasst, die in etwa orthogonal zum ersten und zweiten Zustand sind.

16. Verteilter Lichtwellenleitersensor gemäß den Ansprüchen 1 bis 12 oder Verfahren gemäß den Ansprüchen 13 bis 15, wobei der Umgebungseinfluss ein isotroper Umgebungseinfluss ist und die Sensor-Lichtleitfaser ein transversal asymmetrischer Lichtleiter ist, der so ausgebildet ist, dass sich die Doppelbrechung der Sensor-Lichtleitfaser in Reaktion auf einen isotropen Umgebungseinfluss verändert.

17. Verteilter Lichtwellenleitersensor gemäß den Ansprüchen 1 bis 12 oder 16, oder Verfahren gemäß den Ansprüchen 13 bis 16, wobei es sich bei der Sensor-Lichtleitfaser um einen Lichtleiter mit geringer Doppelbrechung handelt, der eine intrinsische typische Schwebungslänge aufweist, die größer als ein unter 10 Zentimetern, 1 Meter und 10 Metern ausgewählter Wert ist.

18. Verteilter Lichtwellenleitersensor gemäß den Ansprüchen 1 bis 12, 16 oder 17, oder Verfahren gemäß den Ansprüchen 13 bis 17, wobei der Umgebungseinfluss oder Parameter ein Druck ist oder diesen umfasst.

19. Verteilter Lichtwellenleitersensor nach Anspruch 18 oder Verfahren nach Anspruch 18, wobei die Sensor-Lichtleitfaser eine Seitenlochfaser mit einer so auf einen lokalen isotropen Fluiddruck ansprechenden Doppelbrechung ist, dass das Verzögerungsschwebungsfrequenzsignal für den lokalen isotropen Fluiddruck bezeichnend ist.

## Revendications

1. Capteur distribué à fibre optique comprenant :
une fibre optique de capteur monomodale (10) à disposer dans un environnement de sorte que la biréfringence de la fibre de capteur soit sensible à au moins une influence environnementale (24) ;
une source de lumière (12) agencée pour lancer des impulsions de lumière de sonde ayant chacune un état de polarisation de lancement défini dans la fibre optique de capteur ;
un détecteur (20) agencé pour recevoir une lumière de sonde suite à une rétrodiffusion desdites impulsions dans la fibre optique de capteur, et pour détecter des signaux de fréquence de battement de retard à partir de la lumière de sonde reçue en utilisant un ou plusieurs état(s) de polarisation de détecteur ; et
un analyseur (22) agencé pour déterminer au moins un paramètre indiquant ladite influence environnementale, sous forme d'un profil le long d'au moins une partie de la fibre optique de capteur, à partir des propriétés des signaux de fréquence de battement de retard,
**caractérisé en ce que** :
la source de lumière est agencée pour lancer automatiquement une pluralité desdites impulsions de lumière de sonde ayant une diversité de deux états de polarisation de lancement différents ou plus.

2. Capteur distribué à fibre optique de la revendication 1, dans lequel l'analyseur (22) est agencé pour combiner les propriétés des signaux de fréquence de battement de retard à partir de chacune de ladite pluralité d'impulsions lors de la détermination dudit ou desdits plusieurs paramètre(s).

3. Capteur distribué à fibre optique de la revendication 1 ou 2, dans lequel les états de polarisation de lancement sont des états linéaires ayant des directions de polarisation correspondantes.

4. Capteur distribué à fibre optique de la revendication 3, dans lequel la diversité des états de polarisation de lancement est telle que les directions de polarisation comportent des premier et deuxième groupes chacun d'une ou de plusieurs direction(s), les directions dans le premier groupe étant séparées des directions dans le deuxième groupe de 20 à 70 degrés, et plus préférablement de 40 à 50 degrés, et plus préférablement de sensiblement 45 degrés.

5. Capteur distribué à fibre optique de la revendication 1 ou 2, dans lequel la diversité des états de polarisation comprend des premier et deuxième états de polarisation séparés d'un angle de sensiblement 45 degrés.

6. Capteur distribué à fibre optique de la revendication 5, dans lequel la pluralité d'impulsions comprend une ou plusieurs paire(s) d'impulsions séquentielles lancées avec des états linéaires de polarisation dans des directions à 45 degrés les unes par rapport aux autres.

7. Capteur distribué à fibre optique de l'une des revendications 4 à 6, dans lequel la pluralité de directions de polarisation comporte des troisième et quatrième groupes de directions, le troisième groupe étant sensiblement orthogonal au premier groupe, et le quatrième groupe étant sensiblement orthogonal au deuxième groupe.

8. Capteur distribué à fibre optique de l'une des revendications 1 à 7, dans lequel la pluralité d'états de polarisation de lancement est choisie pour réduire la perte dépendant de la polarisation desdites impulsions de lumière de sonde rétrodiffusée vers le détecteur.

9. Capteur distribué à fibre optique de l'une des revendications 1 à 7, dans lequel le détecteur (22) détecte les signaux de fréquence de battement retard en interposant un ou plusieurs élément(s) de polarisation de détecteur pour filtrer la lumière de sonde reçue.

10. Capteur distribué à fibre optique de la revendication 9, dans lequel, pour ladite pluralité d'impulsions, un état de polarisation de détecteur différent particulier est utilisé pour chaque état de polarisation de lancement différent.

11. Capteur distribué à fibre optique de la revendication 9, dans lequel, pour ladite pluralité d'impulsions, chaque état de polarisation de détecteur est réglé pour correspondre à l'état de polarisation de lancement de l'impulsion étant détectée.

12. Capteur distribué à fibre optique de l'une des revendications précédentes, comprenant en outre une unité de commande de polarisation (28) adaptée pour ajuster automatiquement les états de polarisation de lancement et/ou les états de polarisation de détecteur sur la base des propriétés de la lumière de sonde rétrodiffusée reçue au niveau du détecteur.

13. Procédé de mise en correspondance d'un paramètre environnemental le long d'une fibre optique de capteur monomodale, comprenant le fait :
de disposer la fibre optique de capteur (10) dans un environnement de sorte que la biréfringence de la fibre de capteur soit sensible à au moins une influence environnementale (24) ;
de lancer une série d'impulsions de lumière de sonde dans la fibre optique de capteur (10) ;
de détecter un signal de fréquence de battement de retard dans la lumière de sonde rétrodiffusée à partir de la fibre optique de capteur ; et
de mettre en correspondance le paramètre sous forme d'un profil le long de la fibre de capteur à partir des signaux de fréquence de battement de retard de la pluralité d'impulsions,
**caractérisé en ce que** la pluralité d'impulsions comprend des impulsions ayant une diversité d'états de polarisation de lancement lorsqu'elles sont lancées dans la fibre optique de capteur.

14. Procédé de la revendication 13, dans lequel la diversité d'états de polarisation de lancement comprend des premier et deuxième états linéaires de polarisation ayant des directions de polarisation séparées de 40 à 50 degrés.

15. Procédé de la revendication 14, dans lequel la diversité d'états de polarisation de lancement comprend des troisième et quatrième états linéaires de polarisation sensiblement orthogonaux auxdits premier et deuxième états, respectivement.

16. Capteur distribué à fibre optique selon les revendications 1 à 12 ou procédé selon les revendications 13 à 15, dans lequel l'influence environnementale est une influence environnementale isotrope et la fibre optique de capteur est une fibre optique transversalement asymétrique construite de sorte que la biréfringence de la fibre optique de capteur change en réponse à une influence environnementale isotrope.

17. Capteur distribué à fibre optique selon les revendications 1 à 12 ou 16 ou procédé selon les revendications 13 à 16, dans lequel la fibre optique de capteur est une fibre optique à faible biréfringence ayant une longueur de battement typique intrinsèque supérieure à une valeur choisie dans la liste : 10 centimètres ; 1 mètre ; et 10 mètres.

18. Capteur distribué à fibre optique selon les revendications 1 à 12, 16 ou 17 ou procédé selon les revendications 13 à 17, dans lequel le paramètre environnemental ou l'influence environnementale est, ou comprend, la pression.

19. Capteur distribué à fibre optique de la revendication 18 ou procédé de la revendication 18, dans lequel la fibre optique de capteur est une fibre à trou latéral ayant une biréfringence sensible à une pression de fluide isotrope locale, de sorte que le signal de fréquence de battement de retard indique ladite pression de fluide isotrope locale.
